# EUROPÄISCHE PATENTSCHRIFT

(11) **EP 2 440 078 B1**
(45) Veröffentlichungstag und Bekanntmachung des Hinweises auf die Patenterteilung: **05.10.2016**
(21) Anmeldenummer: 10722629.2
(22) Anmeldetag: 27.05.2010
(51) Int. Cl.: A41D 13/04, A41D 13/12, A41H 42/00, B32B 5/26, D06J 1/00, A41D 27/10, B29L 31/48, B32B 5/02, B32B 5/08, B32B 5/22, B32B 7/12, B32B 27/12, B32B 27/32

(54) **WEGWERFBARE OPERATIONSSCHÜRZE UND WEGWERFBARES OPERATIONSBEKLEIDUNGSSET**
DISPOSABLE SURGICAL APRON AND DISPOSABLE GARMENT KIT
TABLIER DE CHIRURGIEN JETABLE ET ENSEMBLE VESTIMENTAIRE JETABLE POUR CHIRURGIEN

(30) Priorität: 09.06.2009 DE 102009024429
(43) Veröffentlichungstag der Anmeldung: 18.04.2012
(73) Patentinhaber: Paul Hartmann Aktiengesellschaft, 89522 Heidenheim (DE)
(72) Erfinder: HÄUSSLER, Stefan, 89075 Ulm (DE); FERNAU, Martin, 89522 Heidenheim (DE); MUCHE, Marion, 89522 Heidenheim (DE); SMITH, David, 74076 Heilbronn (DE); SINDLINGER, Diana, 89233 Neu-Ulm (DE); NAGEL, Eva-Maria, 73525 Schwäbisch Gmünd (DE)
(74) Vertreter: DREISS Patentanwälte PartG mbB
(86) Internationale Anmeldenummer: PCT/EP2010/003236
(87) Internationale Veröffentlichungsnummer: WO 2010/142382

(56) Entgegenhaltungen:
- EP-A1- 1 847 190
- DE-A1- 10 250 275
- GB-A- 1 312 683
- US-A- 3 609 767
- US-A- 3 803 640
- US-A- 5 960 472
- US-A1- 2006 090 237
- US-A1- 2009 070 910
- US-B1- 7 278 171

## Beschreibung

Die Erfindung betrifft eine wegwerfbare Operationsschürze zum Schutz vor Flüssigkeiten oder Mikroorganismen umfassend einen einen Schürzenteil bildenden Flachmaterialbahnabschnitt.

Im Bereich der Operationsbekleidungsstücke sind eine Vielzahl von Varianten bekannt. So sind insbesondere Operationsmäntel beschrieben, wie sie beispielsweise in der DE 102 50 275 A1 offenbart sind. Derartige Operationsmäntel bestehen in der Regel aus einem Vorderteil sowie integral damit verbundenen Ärmeln. Dabei hinaus kann ein Rückenteil vorgesehen sein und das Bekleidungsstück kann insbesondere als Kittel ausgebildet sein. Derartige Bekleidungsstücke bestehen in der Regel aus einem atmungsaktiven Vliesstoff und es ist bekannt, Verstärkungen bereichsweise vorzusehen, um die Barriere gegen das Eindringen von Flüssigkeiten und Mikroorganismen weiter zu verbessern. Dabei kann vorgesehen sein, dass die zusätzliche Verstärkung beispielsweise aus einem Vlies-Folien-Laminat gebildet werden kann.

Nachteilig bei einem solchen OP-Mantel ist, dass die Verstärkung permanent bzw. dauerhaft vorgesehen ist und dadurch der Mantel herstellungs- und kostenmäßig aufwendiger wird. Bei vielen Verwendungen eines derartigen Operationsmantels wäre jedoch eine derartige permanente bzw. dauerhafte Verstärkung nicht notwendig. Darüber hinaus sollen derartige Wegwerfprodukte nicht teurer als notwendig sein.

Aus der EP 1 847 190 A1 ist ein wegwerfbarer Operationsmantel bekannt, bei dem ein Bereich zum Reinigen der Hände vorgesehen ist, und wobei dieser Bereich aus einem wässrige Flüssigkeiten absorbierenden Materialabschnitt besteht. Dabei kann der absorbierende Materialabschnitt mit dem Operationsmantel lösbar oder unlösbar miteinander in Eingriff bringbar sein.

Darüber hinaus ist aus der US 2006/0090237 A1 eine Schürze für Haushaltszwecke bekannt, auf deren Vorderseite ein Handtuch anbringbar ist. Die Schürze ist dabei aus einem wasserdichten Material gebildet.

Eine Schürze, bei der ein Latzteil und ein Schürzenteil aus einer Tasche entnehmbar sind, wobei die Tasche an einem Träger festlegbar ist, sind beispielsweise aus der US 5,960,472 vorbekannt.

Aufgabe der Erfindung ist es nun, eine wegwerfbare Operationsschürze bereitzustellen, die sich zum einen leicht an einem weiteren Operationsbekleidungsstück anbringen lässt und die am meisten durch Flüssigkeit und Mikroorganismen belastete Region des Operateurs, wie insbesondere im Brust-, Bauch-, Hüftbereich, im Bedarfsfall mit einer zusätzlichen Verstärkung versieht.

Zum anderen soll die Schürze die Möglichkeit bieten, bereits vor Beginn oder erst während einer Operation mit weiteren Operationsbekleidungsstücken gekoppelt zu werden, um dann erst bei Bedarf als zusätzliche Verstärkung zur Anwendung gebracht werden zu können.

Die Erfindung löst diese Aufgabe durch eine wegwerfbare Operationsschürze nach Anspruch 1 zum Schutz vor Flüssigkeiten oder Mikroorganismen umfassend einen einen Schürzenteil bildenden Flachmaterialbahnabschnitt, wobei die Operationsschürze ein Taschenteil mit einer Öffnung umfasst, durch welche der Schürzenteil in einer ersten Position in dem Taschenteil aufnehmbar ist und in einer zweiten Position aus diesem entnehmbar ist, wobei der Schürzenteil mit dem Taschenteil im darin aufgenommenen und daraus entnommenen Zustand verbunden ist sowie ein wegwerfbares Operationsbekleidungsset nach Anspruch 12 und ein Verfahren nach Anspruch 15.

Vorteilhaft daran ist, dass die eigentliche Schürze, die durch den Schürzenteil gebildet wird, und die Verpackung für den Schürzenteil, nämlich der Taschenteil, miteinander verbunden sind, und zwar sowohl in einem Zustand, in dem der Schürzenteil in der Tasche aufgenommen ist (also in der ersten Position) als auch in einem Zustand in dem der Schürzenteil aus der Tasche entnommen ist (also in der zweiten Position). Dies bietet den Vorteil, dass zunächst die Operationsschürze in einem Zustand, in dem der Schürzenteil im Taschenteil aufgenommen ist, an einem Operationsbekleidungsstück festgelegt werden kann und dann erst während der Operation, beispielsweise bei Erkennen eines erhöhten Flüssigkeits- oder Mikroorganismenanfall, der Schürzenteil als zusätzliche Abdeckung für einen Träger aus dem Taschenteil entnommen werden kann. Dies bietet den Vorteil, dass erst in der Bedarfssituation der Schürzenteil zusätzlich zum Einsatz kommt, vorher jedoch nicht störend auf die Bewegungsfähigkeit eines Trägers Einfluss nimmt. Darüber hinaus sind bei miteinander verbundenen Teilen die Lagerung, Aufbewahrung und Entsorgung vereinfacht, da beide Teile stets zusammen vorliegen.

Der Schürzenteil und der Taschenteil sind sowohl im aufgenommenen als auch im entnommenen Zustand miteinander verbunden. "Verbunden" bzw. diese Verbindung von Schürzenteil und Taschenteil im Sinne dieser Anmeldung heißt unlösbar verbunden, d.h. es ist im Rahmen des Gebrauches keine Trennung von Schürzenteil und Taschenteil vorgesehen.

In einer alternativen Ausführungsform sind der Schürzenteil und der Taschenteil aus zwei separaten Komponenten gebildet, welche über einen Fügebereich miteinander verbunden sind. Der Fügebereich kann dabei in der Tasche liegen, derart, dass der Schürzenteil aus dem Taschenteil entnehmbar ist. Insbesondere liegt der Fügebereich im Bereich der Öffnung des Taschenteils. Weiter vorzugsweise ist der Fügebereich zwischen Schürzenteil und Taschenteil in Querrichtung betrachtet mittig angelegt und erstreckt sich zumindest über 50%, weiter insbesondere über 75% der Breite der Öffnung des Taschenteils. Weiter vorzugsweise erstreckt sich der Fügebereich über die gesamte Breite der Öffnung des Taschenteils. Dieser Fügebereich kann insbesondere durch adhesive Fügemittel, wie Kleber, insbesondere Hotmeltkleber und/oder insbesondere durch nicht-adhesive Fügemittel, wie insbesondere durch eine Nähnaht und/oder insbesondere durch Schweißstellen, insbesondere thermische Schweißstellen, Kalanderschweißstellen und/oder Ultraschallschweißstellen erhalten werden. Der Fügebereich kann auch eine Kombination an verschiedenen Fügemitteln aufweisen. Vorzugsweise ist der Fügebereich dabei kontinuierlich, d.h. die Fügemittel sind nicht voneinander beabstandet, insbesondere erstrecken sich die Fügemittel kontinuierlich über die gesamte Breite bzw. Querrichtung des Fügebereichs. Damit wird vorteilhafterweise eine unlösbare Verbindung zwischen dem Taschenteil und dem Schürzenteil erhalten, die technisch einfach realisierbar ist. Alternativ kann der Fügebereich auch diskontinuierlich, insbesondere in der Breite oder Querrichtung sein, d.h. die Fügemittel sind voneinander beabstandet. Hierbei wird vorteilhaft die notwendige unlösbare stete Verbindung zwischen dem Schürzenteil und dem Taschenteil bereitgestellt, bei der aber auch aufgrund einer nicht durchgehenden Verbindung die ursprüngliche Flexibilität und Drapierbarkeit der eingesetzten Materialien nur in einem geringeren Maße eingeschränkt wird. Die den Schürzenteil und den Taschenteil bildenden Komponenten können unterschiedliche und/oder identische Materialien aufweisen. Insbesondere bevorzugt sind der Schürzenteil und der Taschenteil aus dem identischen Flachbahnmaterial gebildet.

In einer bevorzugten alternativen Ausführungsform ist der Schürzenteil mit dem Taschenteil einstückig verbunden. Unter einstückig im Sinne dieser Anmeldung wird verstanden, dass der Schürzenteil und der Taschenteil zumindest eine integral miteinander verbundene Materiallage aufweisen. Besonders vorzugsweise sind der Taschenteil und der Schürzenteil aus einem identischen Material gebildet. In einer alternativen bevorzugten Ausführungsform ist aber durchaus denkbar, trotz einstückiger Verbindung von Schürzenteil und Taschenteil, dass sich Schürzenteil und Taschenteil in ihrer Materialzusammensetzung unterscheiden, was so bspw. durch das Aufbringen weiterer Lagen oder Beschichtungen, insbesondere auf den den Schürzenteil bildenden Flächenmaterialbahnabschnitt resultieren kann. Damit wird vorteilhafterweise in einer technisch einfach ausführbaren Form eine Verbindung zwischen dem Taschenteil und dem Schürzenteil bereitgestellt und der Taschenteil und/oder der Schürzenteil, insbesondere der Schürzenteil wird mit den für den vorgesehenen Einsatzbereich notwendigen Materialeigenschaften, wie bspw. Absorptionsfähigkeit, Wasserundurchlässigkeit, ausgerüstet.

Dabei ist vorgesehen, dass der Schürzenteil in dem Taschenteil entlang einer die Öffnung des Taschenteils begrenzenden Seitenkante des Taschenteils festgelegt und verbunden ist.

Der den Schürzenteil bildenden Flachbahnmaterialabschnitt kann dabei Stoß an Stoß mit dem Taschenteil festgelegt und verbunden sein. Dabei stößt eine Querkante des Schürzenteils gegen die Seitenkante des Taschenteils und wird mit dieser entweder über Verbindungs- oder Fügemittel oder einstückig verbunden. Insbesondere vorteilhaft ist der Schürzenteil einstückig entlang einer die Öffnung des Taschenteils begrenzenden Seitenkante mit dem Taschenteil verbunden. Sind die Seitenkante des Taschenteils und die Querkante des Schürzenteils einstückig miteinander verbunden, sind die Seitenkante des Taschenteils sowie der hiermit verbundene Abschnitt der Querkante des Schürzenteils als solche für den Betrachter lediglich imaginär erkennbar.

Der den Schürzenteil bildenden Flachmaterialbahnabschnitt kann alternativ auch mit der Seitenkante des Taschenteils überlappend festgelegt und verbunden sein, wodurch ein vorstehend beschriebener Fügebereich ausgebildet wird.

Dabei erfolgt die Verbindung von Schürzenteil und Taschenteil über die Seitenkante oder den Fügebereich in der Regel bevorzugt mit der Seitenkante des Taschenteils oder mit der Fläche des Taschenteils zur Bildung des Fügebereichs, die im getragenen Zustand der Schürze dem Träger zugewandt ist.

Dabei kann sich die Öffnung des Taschenteils, über die der Schürzenteil aus dem Taschenteil entnommen oder in diesen eingefügt wird, über die gesamte Breite des Taschenteils erstrecken. Auf diese Weise kann der Schürzenteil besonders einfach in der gewünschten Gebrauchsposition aus dem Taschenteil entnommen werden, ohne dass weitere Schritte notwendig sind. Die Verbindung zwischen Schürzenteil und Taschenteil erfolgt vorzugsweise in Querrichtung betrachtet zumindest über 50%, weiter insbesondere über 75% der Breite der Öffnung des Taschenteils. Die Verbindung von Schürzenteil und Taschenteil erfolgt dabei insbesondere bevorzugt über die gesamte Öffnungsbreite der Tasche.

Besonders bevorzugt wird der Taschenteil durch Umlegen eines freien Endes eines Flachmaterialbahnabschnitts gebildet, dessen anderes Ende mit dem den Schürzenteil bildenden Flachmaterialbahnabschnitt verbunden, insbesondere vorzugsweise einstückig verbunden ist. Der Flachmaterialbahnabschnitt, der den Taschenteil bildet wird dabei auf sich selber umgeschlagen und festgelegt. Das Umlegen auf sich selbst erfolgt vorzugsweise um eine in Querrichtung angeordnete Faltlinie, wobei dann die Längskanten, die übereinander zu liegen kommen auf sich selbst miteinander verbunden werden, so dass zugleich eine Öffnung ausgebildet wird, die vorzugsweise in einer Trageposition der Schürze nach unten weist und sich vorzugsweise über die gesamte Breite des Taschenteils in Querrichtung erstrecken kann.

Für das Festlegen des den Taschenteil bildenden Flachmaterialbahnabschnitts auf sich selbst entlang den Längskanten und damit Zusammenfügen werden vorzugsweise adhesive Fügemittel, wie Kleber, insbesondere Hotmeltkleber und/oder nicht-adhesive Fügemittel, wie insbesondere eine Nähnaht und/oder wie insbesondere Schweißstellen, insbesondere thermische Schweißstellen, Kalanderschweißstellen und/oder besonders bevorzugt Ultraschallschweißstellen eingesetzt.

Dabei sollen im Folgenden folgende Bezeichnungen für die räumlichen Erstreckungen der Schürze gewählt werden. Die Schürze, und damit einhergehend auch der Schürzenteil und der Taschenteil, weisen als solche eine Erstreckung in eine erste Richtung und in eine dazu senkrecht stehende zweite Richtung auf, also eine Längsrichtung und eine dazu senkrecht stehende Querrichtung auf. Die in die jeweilige Richtung verlaufenden Kanten werden als Längs- bzw. Querkanten bezeichnet.
Die in Gebrauchslage der Operationsschürze im Wesentlichen in Richtung der Längsachse eines aufrecht stehenden Trägers verlaufenden Richtungen und Kanten der wegwerfbaren Operationsschürze werden als Längsrichtung und Längskanten definiert. Die hierzu im Wesentlichen senkrecht verlaufenden Richtungen und Kanten sind als Querrichtung und Querkanten bezeichnet. Sofern eine Bezeichnung "oben" bzw. "unten" definiert ist, wird hierbei stets von der Anordnung der wegwerfbaren Operationsschürze in Gebrauchslage an einem aufrecht stehenden Träger ausgegangen. Unter "Breite" soll daher hier jeweils eine Erstreckung in Querrichtung sowie mit "Länge" eine Erstreckung in Längsrichtung verstanden werden. Die Bezeichnungen distal und proximal beziehen sich ebenfalls auf Gebrauchslage der Schürze an einem aufrecht stehenden Träger.

Durch die Vorsehung einer Taschenöffnung, die bei getragener Schürze nach unten weist, bietet sich der besondere Vorteil, dass der Schürzenteil sogleich in bedarfsgerechter Weise aus dem Taschenteil entnommen werden kann und keine erneute Festlegung des Schürzenteils bzw. eine erneute Orientierung desselben notwendig ist. Auf diese Weise kann erreicht werden, dass der Schürzenteil möglichst wenigen Berührungen ausgesetzt ist und somit die Sterilität bestmöglich gewahrt werden kann. Darüber hinaus bietet dies den Vorteil, dass die Gefahr, dass Flüssigkeit in den Taschenteil gelangt, verringert ist.

Besonders bevorzugt weist die Operationsschürze auf oder an dem Taschenteil eine Befestigungseinrichtung zum Festlegen der Operationsschürze am Träger auf, wobei die Befestigungseinrichtung insbesondere auf einer dem Träger zugewandten Seite der Operationsschürze im getragenen Zustand angeordnet sein kann. Insbesondere kann vorgesehen sein, dass die Befestigungseinrichtung von einem Kleberauftrag, der insbesondere durch ein Trennpapier abdeckbar ist, gebildet ist. Alternativ kann auch vorgesehen sein, dass ein doppelseitig klebendes Material mit seiner einen klebenden Seite mit dem Taschenteil verbunden ist und auf der anderen klebenden Seite insbesondere durch ein Trennpapier abdeckbar ist. Die Befestigungseinrichtung kann sich über die gesamte Breite des Taschenteils erstrecken oder nur bereichsweise vorgesehen sein.

Unter Festlegen/Befestigen/Anordnen der Operationsschürze an einem Träger wird hierbei insbesondere das Festlegen/Befestigen/Anordnen auf dem Bekleidungsstück eines Trägers, insbesondere auf einem Operationsmantel oder Operationsbekleidungsstück eines Trägers verstanden.

Generell kann als Befestigungseinrichtung auch eine aus sogenannten Haken- und Schlaufenelementen gebildete Befestigungseinrichtung vorgesehen sein. Dies kann insbesondere dann vorgesehen sein, sofern das Operationsbekleidungsstück, an dem die Schürze festgelegt werden soll, aus einem Vliesmaterial gebildet ist oder eine Vlieslage auf der Außenseite aufweist, die als Schlaufenmaterial dienen kann. Dann kann ein entsprechendes Hakenmaterial zur Bildung einer entsprechenden Verbindung auf dem Taschenteil vorgesehen sein.

Der Schürzenteil kann in seiner flächenhaften Erstreckung in Längs- und in Querrichtung, also im aus dem Taschenteil entnommenen und damit ausgebreiteten Zustand jegliche Form aufweisen. Die Längskanten und/oder freie Querkante des Schürzenteils können gerade oder auch gekrümmt ausgestaltet sein.

In einer alternativen Ausführungsform kann vorgesehen sein, dass der Schürzenteil eine rechteckige Form aufweist. Eine Rechteckform bietet mit den jeweils parallel und senkrecht dazu verlaufenden Kanten den Vorteil, dass der den Schürzenteil bildende Flachmaterialbahnabschnitt technisch einfach, also ohne aufwendige Schnittführung bereitgestellt werden kann.

Nach einer besonderen Ausführungsform kann vorgesehen sein, dass der Schürzenteil sich in seinem aus dem Taschenteil entnommenen Zustand in Längsrichtung, insbesondere von proximal nach distal, also von oben nach unten, im angelegten Zustand trapezförmig erweitert. Diese Trapezform bietet den Vorteil, einen Träger auch dann gut hinsichtlich der Passform zu umschließen, wenn sich der Träger in Bewegung befindet. Dabei folgt die Schürze hinsichtlich ihres Schnittes in der Regel dem zusätzlich zur Schürze verwendeten Operationsmantel, der ebenfalls von proximal nach distal weiter werdend verläuft. Dadurch wird erreicht, dass sich die Schürze gut auf dem darunter zu tragenden Bekleidungsstück anlegt und nicht so schnell bei Bewegungen des Trägers zwischen die Beine des Trägers gerät. Darüber hinaus wird durch diese Form die Flüssigkeitsableitung bzw. -aufnahme verbessert.

Darüber hinaus bietet die Vorsehung einer entsprechenden Trapezform den Vorteil, dass bei aufgenommenem Zustand des Schürzenteils im Taschenteil die Längskante des Schürzenteils nicht aufeinander zu liegen kommt, sondern versetzt zueinander im zusammengelegten Zustand angeordnet ist. Hierdurch wird eine Abflachung der Seitenteile erreicht, was den Vorteil bietet, dass der Schürzenteil leichter in den Taschenteil eingefügt werden kann und darüber hinaus zu den Rändern des Taschenteils in Querrichtung sich die Tasche bei aufgenommenem Schürzenteil etwas abflacht, was den Tragekomfort begünstigt.

Der Taschenteil kann dabei vorzugsweise in Längsrichtung verlaufende Längskanten aufweisen und besitzt eine rechteckige Grundform.

Insbesondere sind die Dimensionen des Taschenteils in Querrichtung und die Dimensionen des Schürzenteils in Querrichtung aufeinander abgestimmt, und zwar derart, dass die im Inneren des Taschenteils, also insbesondere nach Festlegen und zusammenfügen der Längskanten des Taschenteils aufeinander, vorhandene Breite zumindest genauso groß, vorzugsweise größer ist als die Dimension der größten Querstreckung des Schürzenteils. Damit kann ein unerwünschtes Umfalten oder in Faltenlegen des Schürzenteils beim Einbringen des Schürzenteils in den Taschenteil vor allem im Bereich der Längskanten des Schürzenteils vermieden werden.

Besonders bevorzugt kann vorgesehen sein, dass der Schürzenteil gefaltet in den Taschenteil aufnehmbar ist. Besonders bevorzugt kann vorgesehen sein, dass der Schürzenteil durch Faltungen um Faltlinien in Querrichtung gefaltet, insbesondere dass der Schürzenteil ziehharmonikaartig gefaltet in den Taschenteil aufnehmbar ist. Eine solche Faltung bietet den Vorteil, dass gegebenenfalls auch nur ein Teil des Schürzenteils in Längsrichtung aus dem Taschenteil entnommen werden kann und das Auseinanderfalten sowie das Falten vergleichsweise einfach bereitzustellen ist, im Gegensatz zu einem Aufrollen des Schürzenteils. Das Aufrollen würde dazu führen, dass das distale Ende des Schürzenteils im aufgerollten Zustand innen angeordnet wäre und dass der Schürzenteil so nicht mit einem Griff ausgefaltet werden könnte. Es ist jedoch nicht erwünscht, dass zu viele Anfasskontakte zwischen einem Träger und der Schürze stattfinden, da hierdurch die Sterilität beeinträchtigt werden kann. Besonders bevorzugt kann vorgesehen sein, dass der Schürzenteil ziehharmonikaartig gefaltet in den Taschenteil aufnehmbar ist, und zwar dass der den Schürzenteil bildende Flachmaterialbahnabschnitt unter Ausbildung von Flachmaterialbahnunterabschnitten mit insbesondere weitgehend gleicher Höhe in Längsrichtung entlang in Querrichtung verlaufenden Faltlinien gefaltet ist. Die Faltlinien sind dann äquidistant angeordet. Die Faltlinien sind insbesondere imaginäre Linien, die nicht sicht- oder fühlbar gekennzeichnet sind.

Besonders bevorzugt kann vorgesehen sein, dass der Taschenteil eine sich in Querrichtung erstreckende Öffnung umfasst, durch die der Schürzenteil aus dem Taschenteil in Längsrichtung als Auszugsrichtung des Schürzenteils entnehmbar ist.

Weiterhin kann vorgesehen sein, dass der Schürzenteil im Taschenteil in einem Zustand, in dem er im Taschenteil aufgenommen worden ist, lösbar festlegbar ist. Hierzu kann der Schürzenteil insbesondere ein oder mehrere Elemente eines ersten Haftelementes tragen, wobei die ersten Haftelemente mit korrespondierenden zweiten Haftelementen am Taschenteil zusammenwirken. Derartige Haftelemente können beispielsweise durch sogenannte Haken- und Schlaufenbefestigungselemente bzw. Haken- und Schlaufenelemente gebildet werden. Insbesondere kann vorgesehen sein, dass ein entsprechendes Hakenelement am Schürzenteil, insbesondere an dessen distaler nach innen gerichteten freien Querkante im getragenen Zustand, angeordnet ist, wobei dieses Hakenelement mit einem Schlaufenbefestigungselement auf der Innenseite des Taschenteil zusammenwirkt, wobei insbesondere das Material des Taschenteils selber auf der Innenseite des Taschenteils, insbesondere ein Vliesmaterial, als Schlaufenbefestigungselement zur Bildung einer entsprechenden Verbindung dient. Dies hat den Vorteil, dass über entsprechende Hakenverbindungselemente, die am distalen Ende des Schürzenteils im entnommenen Zustand des Schürzenteils vorgesehen sind und die in Richtung auf den Träger weisen, die Schürze an einem Operationsmantel oder Operationsbekleidungsstück aus einem Vliesmaterial eines Trägers fixiert werden kann.

Dabei ist es besonders vorteilhaft, wenn die Seite des Schürzenteils, die in einem angelegten Zustand der Schürze auf einen Träger zuweist, im gefalteten Zustand, insbesondere bei ziehharmonikaartiger Faltung, außen zu liegen kommt. Dies bietet den Vorteil, dass die Sterilität auch bei ungewolltem Anfassen des Schürzenteils beim Entnehmen aus dem Taschenteil weitgehend gewahrt bleiben kann.

Weitere Haftelemente können beispielsweise an den Längskanten des Schürzenteils, insbesondere im oberen proximalen Drittel des Schürzenteils, insbesondere auf der dem Träger zugewandten Seite vorgesehen sein. Diese Haftelemente können ebenfalls dazu dienen, mit korrespondierenden Haftelementen (z. B. dem darunter liegenden Bekleidungsstück) an einem Träger in einer aus dem Taschenteil entnommenen und angelegten Position der Schürze haftend zusammenzuwirken. Auch hier ist es besonders vorteilhaft, wenn als Haftelemente sogenannte Haken und Schlaufenbefestigungshaftelemente vorgesehen sind, wobei insbesondere die Hakenelemente am Schürzenteil vorgesehen sein können und mit dem Material des weiteren Operationsbekleidungsstücks, das der Träger unter der Schürze angelegt hat, wobei es sich hierbei insbesondere um ein Vliesmaterial handelt, zusammenwirken können.

Durch die Anbringung von Haftelementen im oberen proximalen Drittel der Längsrichtung des Schürzenteils wird der Vorteil erreicht, dass diese mit der darunter liegenden Operationsbekleidung einfach in Haftung gebracht werden können, insbesondere ohne dass sich der Operateur bücken muss, was aus Sterilitätsgründen nicht erwünscht ist.

Alternativ können stets statt Haken- und Schlaufenelementen auch adhäsive und/oder kohäsive Haftelemente oder Kombinationen davon eingesetzt werden.

Als Materialien für den Schürzenteil und/oder Taschenteil werden insbesondere Vlies- und/oder Folienmaterial, oder auch Vlies-Folien-Laminate eingesetzt.
Als Vliesmaterial, so auch im Vlies-Folien-Laminat, wird bevorzugt Spunbond(S) und/oder Meltblown(M), oder Laminate aus Spunbond- und/oder Meltblownvlieslagen oder insbesondere Laminate aus Spunbond- und Meltblownvlieslagen, wie insbesondere SM, SMS, SMMS oder SMMMS eingesetzt. Besonders bevorzugt besteht das Vliesmaterial aus Polyethylen und/oder Polypropylen und/oder aus Mischungen davon als Hauptkomponente. Besonders bevorzugt weist das Vliesmaterial ein Flächengewicht von insbesondere 20 - 40 g/m², weiter insbesondere von 25 - 35 g/m², besonders bevorzugt von ca. 30 ± 3 g/m² auf. Insbesondere bevorzugt sind die eingesetzten Vliesmaterialien, auch solche im Vlies-Folien-Laminat hydrophilisiert.

Als Folien werden bevorzugt nicht mikroporöse Folien eingesetzt. Insbesondere wird eine Polyethylenfolie eingesetzt. Die Folie weist insbesondere ein Flächengewicht von insbesondere 15 - 35 g/cm², weiter insbesondere von 20 - 30 g/cm² , besonders bevorzugt von 25 ± 2 g/cm² auf.

Die Laminierung der Vlies-Folien-Laminate kann auf jegliche Art erfolgen, vorzugsweise sind Vlies und Folie mittels Thermobonding und/oder Kleber, insbesondere Hotmeltkleber verbunden. Insbesondere bevorzugt werden thermogebundene Vlies-Folien-Laminate eingesetzt.

Das gesamte Flächengewicht des Vlies-Folien-Laminats kann insbesondere bei 35 - 75 g/cm², weiter insbesondere bei 45 - 65 g/cm², besonders bevorzugt bei ca. 55 ± 5 g/cm² liegen.

Besonders bevorzugt wird für den Schürzenteil und/oder den Taschenteil ein Vlies-Folien-Laminat eingesetzt. Insbesondere bevorzugt wird für den den Schürzenteil bildenden Flachmaterialbahnabschnitt ein Vlies-Folien-Laminat, wie vorangehend dargestellt, eingesetzt.

Besonders bevorzugt kann die Operationsschürze, damit also einhergehend der Taschenteil und der Schürzenteil, dabei aus einem Vlies-Folien-Laminat bestehen, wobei die Folienseite des Laminats, insbesondere die dem Träger zugewandte Seite, in einem an einen Träger angelegten, entnommenen Zustand des Schürzenteils bildet. In dieser Ausführungsform wird die Außenseite des Taschenteils durch die Folienschicht des Laminats gebildet ist. Hierdurch wird erreicht, dass im noch nicht herausgenommenen Zustand des Schürzenteils aus dem Taschenteil der Schürzenteil möglichst wenig mit Flüssigkeiten kontaminiert wird, da ein Aufsaugen von Flüssigkeiten durch die Folienschicht des Taschenteils verhindert wird. Alternativ kann die Folienseite jedoch auch die vom Träger weg weisende Seite des Schürzenteils in einem an einen Träger angelegten Zustand sein. Vorteilhaft weist die Folie dadurch in Gebrauchslage als eigentliche Sperrschicht nach außen.

Bei dem Vlies-Folien-Laminat kann das Vliesmaterial insbesondere ein Spunbond- und/oder ein Meltblownmaterial sein. Weiter bevorzugt können auch verschiedene Vlieslagen zum Laminat miteinander zusammengefasst sein, wobei insbesondere abwechselnd Spunbond- und Meltblownlagen eingesetzt werden können. Dabei wird die äußere Lage insbesondere durch eine Spunbondlage gebildet. Insbesondere kann es sich um ein Vliesmaterial aus einem Polypropylen und/oder Polyethylen oder Kombinationen handeln. Besonders bevorzugt weist das Vliesmaterial ein Flächengewicht von insbesondere 20 - 40 g/m² weiter insbesondere von 25 - 35 g/m², besonders bevorzugt von ca. 30 ± 3 g/m² auf.

Besonders bevorzugt kann jedoch eine Polypropylenspunbondschicht als Vliesstoff eingesetzt werden, mit einem Flächengewicht von insbesondere 20 - 40 g/m², weiter insbesondere von 25 - 35 g/m², besonders bevorzugt von ca. 30 ± 3 g_{/}m²_{.}

Als Folie des Vlies-Folien-Laminats kann insbesondere eine Polyethylenfolie, insbesondere eine nicht mikroporöse, eingesetzt werden, mit einem Flächengewicht von insbesondere 15 - 35 g/cm² , weiter insbesondere von 20 - 30 g/cm² , besonders bevorzugt von 25 ± 2 g/cm².

Das Flächengewicht des Vlies-Folien-Laminats kann insbesondere bei 35 - 75 g/cm², weiter insbesondere bei 45 - 65 g/cm², besonders bevorzugt bei ca. 55 ± 5 g/cm² liegen.

Die Operationsschürze soll dabei vorzugsweise einen Durchgangswiderstand gegen das Durchdringen von Wasser von > 150 cm, weiter vorzugsweise von > 200 cm (gemessen nach EN 20 811) aufweisen. Insbesondere der den Schürzenteil bildende Flachmaterialbahnabschnitt weist einen Durchgangswiderstand gegen das Durchdringen von Wasser von > 150 cm, weiter vorzugsweise von > 200 cm (gemessen nach EN 20 811) auf.

Ein besonderer Vorteil der Operationsschürze gemäß der vorliegenden Erfindung besteht darüber hinaus darin, dass die Anbringungshöhe individuell und je nach Bedarf gewählt werden kann und insbesondere eine Anbringung im Brustbereich, aber auch im Bauch- oder Hüftbereich möglich ist, um den jeweils belasteten Bereich zu schützen. Besonders vorteilhaft kann dabei die Schürze auch noch während der Operation aus ihrer sterilen Verpackung entnommen und auf der weiteren Operationsbekleidung eines Trägers angebracht werden.

Besonders bevorzugt kann des Weiteren vorgesehen sein, dass der Schürzenteil einen Anfassabschnitt, insbesondere an seiner freien, distalen Querkante, umfasst, der in einer in den Taschenteil aufgenommenen Position aus dem Taschenteil herausragt. Dieser Anfassabschnitt kann dabei durch einen Bereich des Schürzenteils selber gebildet werden oder durch ein separates Materialstück realisiert sein. Insbesondere kann der Anfassabschnitt dadurch bereitgestellt werden, dass am distalen Querrand des Schürzenteils Einschnitte vorgenommen werden und ein Teil des distalen Endes nicht mit in die Faltung, insbesondere die Zickzackfaltung(Ziehharmonika-Faltung) aufgenommen und in den Taschenteil eingebracht wird, sondern aus dem Taschenteil herausragt. Zur besseren Erfassbarkeit kann darüber hinaus vorgesehen sein, dass im Taschenteil, insbesondere im Deckel des Taschenteils, d. h. der Bereich, der weiter vom Träger entfernt ist, eine Ausnehmung vorgesehen ist, die ein besseres Ergreifen des Anfassabschnitts ermöglicht.

Hinsichtlich der Dimensionen der wegwerfbaren Operationsschürze, weist die Operationsschürze mit dem Schürzenteil in einer ersten Position, also in der der Schürzenteil im Taschenteil aufgenommen ist, augenscheinlich die Grundform des Taschenteils, insbesondere eine rechteckförmige Grundform des Taschenteils auf. Insbesondere weist der Taschenteil eine größere Quererstreckung als Längserstreckung auf.
Zur Ermittlung der Längs- und Quererstreckung des Taschenteils und damit der Länge (bzw. auch synonym als Höhe verstanden) und der Breite des Taschenteils, wird die Richtung der Öffnung des Taschenteils herangezogen, derart dass der Verlauf der Kanten, welche die Öffnung des Taschenteils begrenzen als in Querrichtung verlaufend festgelegt werden.

Insbesondere weist der Taschenteil ein Verhältnis von Breite zu Länge(bzw. Höhe) vorzugsweise von mindestens 2: 1, weiter vorzugsweise von mindestens 3:1, weiter vorzugsweise von mindestens 4:1 , weiter vorzugsweise von mindestens 5:1, und vorzugsweise von höchstens 16 : 1, weiter vorzugsweise von höchstens 14 : 1, weiter vorzugsweise von höchstens 13:1, weiter vorzugsweise von höchstens 12:1 auf.

Der Taschenteil weist vorzugsweise eine Quererstreckung von 30-80 cm, weiter vorzugsweise von 35-80 cm, weiter vorzugsweise von 40 - 80 cm, weiter vorzugsweise von 45 - 80 cm, weiter vorzugsweise von 50 - 75 cm, weiter vorzugsweise von 55 - 70 cm, weiter vorzugsweise von 60 - 70 cm, und eine Längserstreckung von vorzugsweise 5 - 15 cm, weiter vorzugsweise 5 -12 cm, weiter vorzugsweise von 5 - 10 cm auf.

Bei der erfindungsgemäßen Operationsschürze mit dem Schürzenteil in einer zweiten Position, also im mit dem Schürzenteil aus dem Taschenteil entnommenen Zustand, ist der Schürzenteil auch augenscheinlich in seiner flächenhaften Erstreckung in Längsrichtung und in Querrichtung erkennbar.

Wie eingangs bereits festgelegt, wird als Längsrichtung der Operationsschürze die in der Gebrauchslage der Operationsschürze vorgesehene Orientierung an der Längsachse eines Trägers definiert. Entsprechend senkrecht dazu verläuft die Querrichtung. Dementsprechend weist der Schürzenteil eine Längserstreckung (Länge bzw. Höhe) und eine Quererstreckung (Breite) auf. Der Schürzenteil wird aus der in Querrichtung verlaufenden Öffnung des Taschenteils senkrecht dazu, nämlich in Längsrichtung, von proximal nach distal als Auszugsrichtung, entnommen.

In einer bevorzugten Ausführungsform weist der Schürzenteil eine flächenhafte Erstreckung, welche im vollständig aus dem Taschenteil entnommenen und ausgebreiteten Zustand augenscheinlich erkennbar und abmessbar ist, mit unterschiedlicher Länge und Breite auf.
Insbesondere weist der Schürzenteil eine flächenhafte Erstreckung mit einem Verhältnis von Länge zu Breite von vorzugsweise zwischen 2,5 : 1 und 1 : 2,5 auf. In einer bevorzugten Ausführungsform weist der Schürzenteil eine flächenhafte Erstreckung mit einer größeren Länge als Breite auf. Insbesondere ist das Verhältnis von Länge zu Breite des Schürzenteils mindestens 1,2 : 1,weiter vorzugsweise mindestens 1,3 :1, weiter vorzugsweise mindestens 1,4 : 1 und vorzugsweise höchstens 2,5 : 1,weiter vorzugsweise höchstens 2,3: 1, weiter vorzugsweise höchstens 2,1 : 1, weiter vorzugsweise höchstens 2,0: 1.

In einer alternativen Ausführungsform weist der Schürzenteil eine flächenhafte Erstreckung mit einer größeren Breite als Länge auf. Insbesondere ist das Verhältnis Länge zu Breite des Schürzenteils mindestens 1 : 1,2, vorzugsweise mindestens 1 : 1,3, weiter vorzugsweise mindestens 1 :1,4 und vorzugsweise höchstens 1 : 2,5, weiter vorzugsweise höchstens 1 : 2,3, weiter vorzugsweise höchstens 1: 2,1, weiter vorzugsweise höchstens 1 :2,0.

Bei nicht parallel gleich verlaufenden Kanten, wie bspw. bei einem trapezförmigen Schürzenteil müssen jeweils alle Kanten diese Verhältnisse erfüllen.

Der Schürzenteil weist vorzugsweise eine Breite von 30-80 cm, weiter vorzugsweise von 35-80 cm, weiter vorzugsweise von 40 - 80 cm, weiter vorzugsweise von 45 - 80 cm, weiter vorzugsweise von 50 - 75 cm, weiter vorzugsweise von 55 - 70 cm, weiter vorzugsweise von 60 - 70 cm auf.

Der Schürzenteil weist vorzugsweise eine Länge von 25 - 110 cm, weiter vorzugsweise 30 - 100 cm, weiter vorzugsweise 35 - 100 cm, weiter vorzugsweise von 40 - 100 cm, weiter vorzugsweise von 45 - 100 cm, weiter vorzugsweise von 50 - 100 cm, weiter vorzugsweise von 55 - 100 cm auf.

In einer weiteren alternativen Ausführungsform ist durchaus auch denkbar, dass der Schürzenteil eine flächenhafte Erstreckung in Längs- und Querrichtung mit einem Verhältnis von Länge zu Breite des Schürzenteils von 1:1 aufweist.

Nach einem weiteren Gegenstand der Erfindung kann diese ein wegwerfbares Operationsbekleidungsset umfassen, insbesondere zum Schutz vor Flüssigkeiten oder Mikroorganismen, umfassend einen wegwerfbaren Operationsmantel mit einem Vorderteil sowie integral damit verbundenen Ärmeln und eine Operationsschürze nach der vorstehend beschriebenen Art. Dabei kann der Operationsmantel zusätzlich noch einen oder zwei Rückenteile aufweisen und er kann insbesondere als Schlüpfkittel oder auch als Bindekittel ausgestaltet sein.

Ein derartiger Operationsmantel kann dabei insbesondere aus einem Vliesstoff bestehen, wobei zumindest wenigstens die äußere Schicht aus einem Vliesstoff bestehen sollte, also die dem Träger ferne nach außen gerichtete Schicht. Hierdurch wird eine besonders gute Anhaftbarkeit der Operationsschürze am Operationsmantel sichergestellt, sowohl durch eine gegebenenfalls vorgesehene adhäsive Befestigungseinheit, aber auch insbesondere durch entsprechende Haken- und Schlaufen- bzw. Ösenhaftelemente. Bei dem Vliesstoff kann es sich insbesondere um einen atmungsaktiven Vliesstoff bestehend aus Spunbond(S)- und/oder Meltblown(M)-schichten handeln, insbesondere aus einem Laminat aus Spundbond und/oder Meltblown-Schichten, insbesondere aus einem Laminat aus Spundbond und Meltblown-Schichten, insbesondere um ein sogenanntes SM-, SMS, SMMS-Material, das insbesondere aus einem Polypropylen gebildet sein kann. Ein entsprechendes Material ist beispielsweise in der DE 102 50 275 A1 beschrieben, die hinsichtlich dieser Offenbarung zum Gegenstand der vorliegenden Anmeldung gemacht wird.

Des Weiteren kann vorgesehen sein, dass die Ärmel insbesondere im Bereich der unteren Ärmelenden im Bereich der Hände insbesondere bis an oder über die Ellbogen mit einer Sperrschicht versehen sind, die insbesondere durch eine Folienlage oder ein Vlies-Folien-Laminat gebildet ist. Das Vlies-Folien-Laminat der Sperrschicht kann dabei dem Vlies-Folien-Laminat der Operationsschürze entsprechen. Durch die Bereitstellung einer nachträglich anfügbaren Operationsschürze, die an annähernd beliebiger Stelle des Operationsmantels angebracht werden kann, kann auf die Vorsehung einer zusätzlichen Sperrschicht z. B. im Bereich der Frontseite eines Trägers verzichtet werden.
Die Operationsschürze ist insbesondere bevorzugt im vorderen Brust-, Bauch- oder Taillenbereich mit ihrer Befestigungseinrichtung am Operationsmantel festlegbar. Insbesondere sind die an dem Schürzenteil angebrachten Haftelemente an dem Operationsmantel anhaftbar.

Nach einem weiteren Gegenstand der Erfindung kann diese ein Verfahren zur Herstellung einer wegwerfbaren Operationsschürze zum Schutz vor Flüssigkeiten oder Mikroorganismen betreffen, wobei die Operationsschürze umfassend einen einen Schürzenteil bildenden Flachmaterialbahnabschnitt dadurch gekennzeichnet ist, dass die Operationsschürze einen Taschenteil mit einer Öffnung umfasst, durch die der Schürzenteil in einer ersten Position in den Taschenteil aufnehmbar ist und in einer zweiten Position aus diesem entnehmbar ist, und wobei der Schürzenteil mit dem Taschenteil im darin aufgenommenen und daraus entnommenen Zustand verbunden ist. Das Verfahren umfasst dabei die folgenden Verfahrensschritte, nämlich Bereitstellen eines Flachmaterialbahnabschnitts für den Schürzenteil und Bereitstellen eines Flachmaterialbahnabschnitts für den Taschenteil, derart, dass der Schürzenteil und der Taschenteil miteinander verbunden sind und dass eine Öffnung im Taschenteil verbleibt, und nachfolgend Bereitstellen des Schürzenteils in einer ersten Position, derart, dass der den Schürzenteil bildende erste Flachmaterialbahnabschnitt durch die Öffnung des Taschenteils aufgenommen wird.

Besonders bevorzugt wird das Bereitstellen des Schürzenteils in einer ersten Position, also in im Taschenteil aufgenommenen Zustand derart durchgeführt, dass der Schürzenteil gefaltet in dem Taschenteil aufgenommen ist, und zwar insbesondere durch den Verfahrensschritt, dass der den Schürzenteil bildende Flachmaterialbahnabschnitt in Längsrichtung entlang in Querrichtung verlaufenden Faltlinien, insbesondere äquidistant angeordneten Faltlinien, unter Ausbildung von Flachmaterialbahnunterabschnitten, insbesondere unter Ausbildung von Flachmaterialbahnunterabschnitten mit gleicher Höhe, insbesondere unter einer ziehharmonikaartigen Anordnung der Flachmaterialbahnunterabschnitten gefaltet wird.

Besonders bevorzugt werden der den Taschenteil bildende Flachmaterialbahnabschnitt und der den Schürzenteil bildende Flachmaterialbahnabschnitt einstückig bereitgestellt, und der Taschenteil wird durch das Umlegen eines freien Endes des den Taschenteil bildenden Flachmaterialbahnabschnitts, insbesondere um eine Faltlinie in Querrichtung, und Festlegen und Zusammenfügen auf sich selbst, insbesondere entlang von Längskanten gebildet. Dabei halbiert die Faltlinie in Querrichtung den Flachmaterialbahnabschnitt des Taschenteils vorzugsweise in Längsrichtung.

Weitere Vorteile und Merkmale der Erfindung ergeben sich aus den übrigen Anmeldungsunterlagen. Die Erfindung wird im Folgenden anhand einer Zeichnung näher erläutert. Dabei zeigen:
Figur 1 einen Flachmaterialbahnabschnitt zur Herstellung einer Operationsschürze;
Figur 2 die Operationsschürze mit Taschenteil und Schürzenteil;
Figur 3 die Operationsschürze mit Faltungslinien;
Figur 4 die in den Taschenteil eingebrachte Operationsschürze;
Figur 5 einen Operationsmantel mit daran angebrachter Operationsschürze;
Figur 6 die Gestaltung gemäß Figur 5 mit entnommenem Schürzenteil und
Figuren 7 und 8 zwei Schritte zur Überführung des Schürzenteils von einem aufgenommenen in einen entnommenen Zustand, wie ihn die Figuren 5 und 6 zeigen.

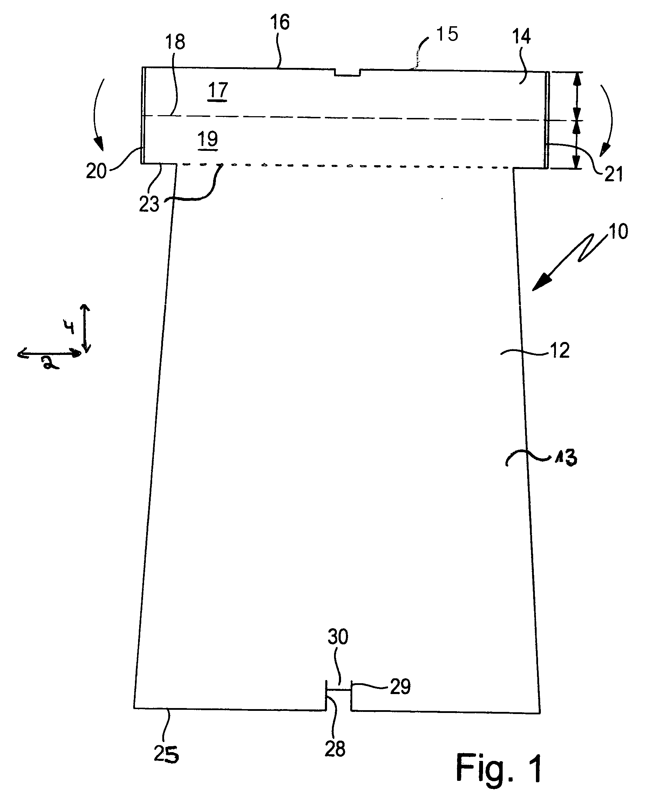

Figur 1 zeigt einen Flachmaterialbahnabschnitt zur Herstellung einer Operationsschürze. Der Flachmaterialbahnabschnitt 13 umfasst dabei einen Schürzenteil 12 und der Flachmaterialbahnabschnitt 15 umfasst einen Taschenteil 14. Der Schürzenteil 12 und der Taschenteil 14 sind zur Bildung einer Operationsschürze 10 einstückig miteinander verbunden und bestehen aus einem zusammenhängenden Flachmaterialbahnabschnitt. Zur Bildung des Taschenteils wird nun ein freies Ende, also eine Kante 16 des Flachmaterialbahnabschnitts 15 so um eine Faltlinie 18 in Querrichtung 2 umgelegt, dass der Bereich 17 auf dem Bereich 19 des Flachmaterialbahnabschnitts zu liegen kommt. Entlang der in Längsrichtung 4 verlaufenden Längs- oder Seitenkanten 20 und 21 des Taschenbereichs 14 werden dann Nähte angebracht. Der Taschenbereich kann dabei im gebildeten Zustand eine rechteckige Form mit einer Höhe von ca. 8 cm und eine Breite von ca. 64 cm aufweisen. Der Taschenteil ist dabei über seine gesamte Breite nach unten hin geöffnet. Die Anbringung der Seitennähte entlang der Längskanten 20 und 21 erfolgt dabei vorzugsweise über ein Ultraschallschweißverfahren. Entlang der Seitenkante 23 geht der Taschenteil 14 einstückig in den Schürzenteil 12 über. Der Taschenteil 14 ist dabei im Bereich der Kante 23 breiter als der Schürzenteil, die von proximal nach distal, also von der Kante 23 zur Kante 25 trapezförmig ausgebildet ist, wodurch eine verbesserte Flüssigkeitsaufnahme bereitgestellt wird und darüber hinaus die Passform verbessert werden kann. Die Kante 25 besitzt dabei eine geringfügig geringere Breite als die Breite des Taschenteils 14 zwischen den Nähten.

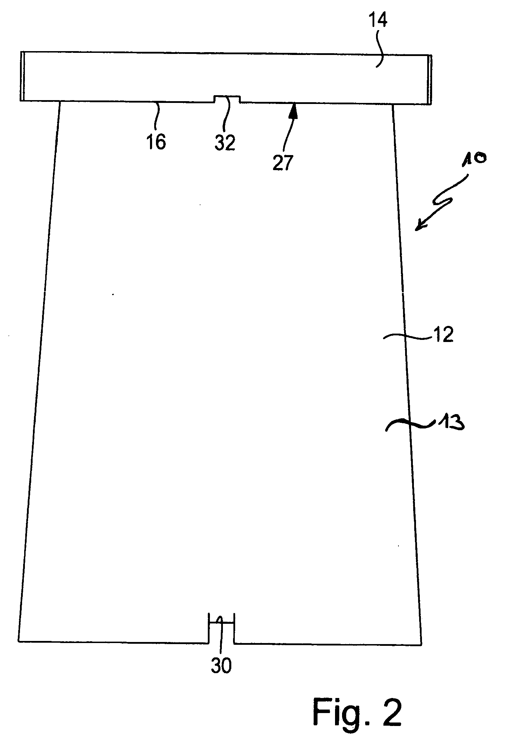

Der Schürzenteil 12 weist dabei eine Länge in Längsrichtung 4 von ca. 90 cm auf, wobei die untere Kante 25 ebenfalls eine Breite von ca. 64 cm aufweisen kann, so dass der Taschenteil 14 lediglich geringfügig breiter als die Kante 25 ist, so dass durch eine Öffnung, die insbesondere in Figur 2 dargestellt und hier mit dem Bezugszeichen 27 versehen ist, der Schürzenteil 12 in den Taschenteil 14 eingefügt werden kann.

Darüber hinaus weist der Flachmaterialbahnabschnitt 13 des Schürzenteils 12 an seiner distalen Querkante 25 zwei Schlitze 28 und 29 auf, wobei im Bereich zwischen den Schlitzen ein in etwa quadratisches Materialstück entfernt worden ist, so dass lediglich noch ein Anfassabschnitt 30 stehen geblieben ist. Zusätzlich weist der Taschenteil an seiner bei gefaltetem Zustand im Bereich seiner Öffnung liegenden Kante 16 eine Ausnehmung 32 auf, die der besseren Greifbarkeit des Anfassabschnitts 30 dient.

Die Schürze kann dabei vorzugsweise aus einem Vlies-Folien-Laminat gebildet sein, wobei in der in Figur 2 gezeigten Darstellung, bei der der Betrachter auf die Außenseite der Schürze bei getragener Schürze blicken würde, das Vliesmaterial des Vlies-Folien-Laminats die Außenseite bildet, wobei die Innenseite des Taschenteils 14 die Außenseite des Schürzenteils 12 bildet, so dass die Außenseite des Taschenteils 14 durch die Folienschicht des Laminats gebildet ist. Hierdurch wird erreicht, dass im noch nicht herausgenommenen Zustand des Schürzenteils 12 aus dem Taschenteil 14 der Taschenteil 14 und damit auch der darin aufgenommene Schürzenteil möglichst wenig mit Flüssigkeiten kontaminiert wird, da ein Aufsaugen von Flüssigkeiten durch die Folienschicht verhindert ist.

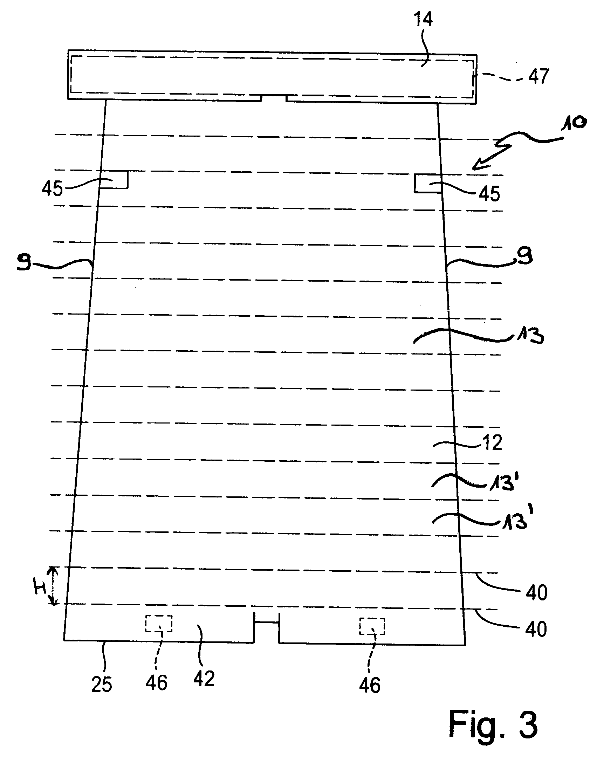

Figur 3 zeigt nun die Schürze 10, wobei hier Faltlinien 40 für eine ziehharmonikaartige Faltung des Schürzenteils 12 eingezeichnet sind, wobei die Faltung des den Schürzenteil 12 bildenden Flachmaterialbahnabschnitts 13 in Flachmaterialbahnunterabschnitte 13' mit weitgehend gleicher Höhe H so erfolgt, dass der am weitesten distal angeordnete Abschnitt 42 zwischen der Kante 25 und der ersten Faltlinie 40 so im endgültig gefalteten Zustand vorliegt, dass das Folienmaterial nach außen weist, so dass das Folienmaterial des Schürzenteils 12 mit dem Inneren des Taschenteils 14 in Kontakt tritt. Darüber hinaus zeigt Figur 3 Haftelemente 45, die im oberen proximalen Drittel des Schürzenteils 12 an den Längskanten 9 angeordnet sind, wobei die Haftelemente auf der dem Träger zugewandten Seite des Schürzenteils 12 angeordnet sind, so dass, sofern der Träger die Schürze 10 über ein Bekleidungsstück, beispielsweise einen Operationsmantel anlegt, die Haftelemente 45 mit dem darunter liegenden Bekleidungsstück, insbesondere dem Operationsmantel, in Kontakt kommen und an diesem einfach angehaftet werden können. Auf diese Weise soll ein Verrutschen sowie ein Bewegen der Schürze gegenüber einem darunter liegenden Operationsbekleidungsstück verhindert werden.

Darüber hinaus weist der Schürzenteil 12 auf seiner nicht dargestellten Rückseite an seinem distalen Ende Haftelemente 46 auf, die ebenfalls bei angelegter Operationsschürze mit einem darunter getragenen Bekleidungsstück zusammenwirken können. Darüber hinaus bieten die Haftelemente 46 die Möglichkeit, den ziehharmonikaartig gefalteten Schürzenteil 12 an der Innenseite des Taschenteils 14 festzulegen. Dazu wirken die als Hakenelemente ausgebildeten Haftelemente 46 mit dem Vliesmaterial des Vlies-Folien-Laminats, das die Innenseite des Taschenteils 14 bildet, haftend zusammen.

Auf diese Weise kann erreicht werden, dass der zusammengelegte Schürzenteil 12 vor dem Entnehmen sicher im Taschenteil 14 gehalten ist.

Darüber hinaus ist mit dem Bezugszeichen 47 auf der Rückseite des Taschenteils 14 eine Befestigungseinrichtung angedeutet, die aus einem doppelseitigen Klebeband bestehen kann, das mit seiner einen Fläche am Taschenteil 14, und zwar an dessen dem Träger zugewandter Seite angeordnet ist, und dessen zweite Fläche mit einem Trennpapier abgedeckt ist, das im Bedarfsfall abgezogen wird, so dass der Taschenteil 14 dann im Brust-, Bauch- oder Hüftbereich eines Trägers angebracht werden kann.

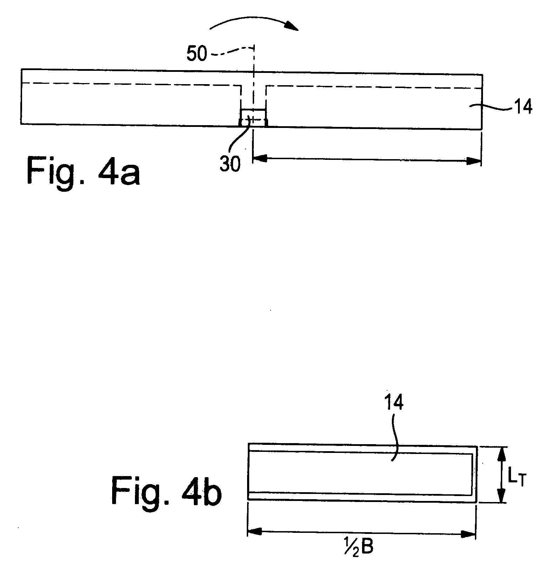

Figur 4a zeigt nun ein Taschenteil 14 mit darin eingebrachtem Schürzenteil, wobei hier zu erkennen ist, dass der Anfassabschnitt 30 außen auf dem Taschenteil 14 zu liegen kommt und so besonders einfach ergriffen werden kann, ohne dass ein Benutzer weitergehenden Kontakt mit dem Schürzenteil 12 hat. Zur weiteren Lagerung und Verpackung kann dann der Taschenteil um die Achse 50 in seiner Querrichtung halb zusammengefaltet werden, wobei ein entsprechend gefalteter Taschenteil 14 in Figur 4b dargestellt ist.

Der gefaltete Taschenteil weist Abmessungen in Längsrichtung von L = 8 cm und in Querrichtung von B = 32 cm auf. In dieser Größe kann eine besonders einfache Verstauung und Lagerung erfolgen.

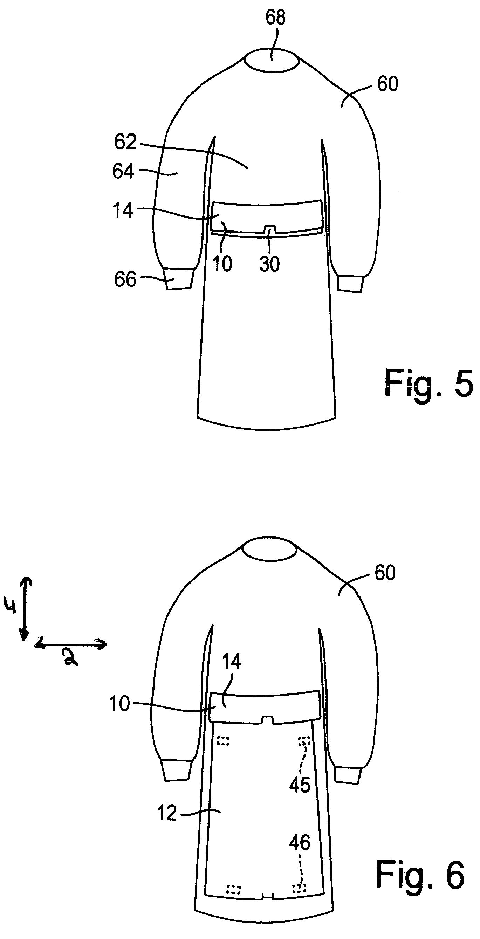

Figur 5 zeigt nun einen Operationsmantel, der in seiner Gesamtheit mit dem Bezugszeichen 60 bezeichnet ist und auf dem eine Operationsschürze 10 im Bauchbereich des Operationsmantels 60 angebracht worden ist, wobei der Operationsmantel 60 und die Operationsschürze 10 ein wegwerfbares Operationsbekleidungsset bilden können. Der Operationsmantel 60 umfasst dabei ein Vorderteil 62 sowie Ärmel 64 mit Bündchen 66 im Bereich der Hände. Dabei kann vorgesehen sein, dass im Bereich der Ärmel 64 ausgehend von den Bündchen 66 bis ca. in den Bereich der Ellbogen Verstärkungen vorgesehen sind, um hier einen größeren Schutz gegen den Durchtritt von Flüssigkeit und Mikroorganismen zu haben. Des Weiteren weist der Operationsmantel 60 eine Halsöffnung 68 auf.

Die Operationsschürze 10 ist dabei in einer Form auf den Operationsmantel 60 aufgebracht, wie sie in Figur 4a gezeigt ist, nämlich mit aufgenommenem Schürzenteil in den Taschenteil 14. Figur 6 zeigt nun den Operationsmantel 60 mit aufgebrachter Operationsschürze 10, wobei hier der Schürzenteil 12 aus dem Taschenteil 14 entnommen worden ist, wobei dies durch Ergreifen des Anfassabschnitts 30, der sich außerhalb des Taschenteils 14 befindet, erfolgt und der Schürzenteil 12 am Anfassabschnitt 30 aus dem Taschenteil 14 herausgezogen wird und danach nach unten durch die Schwerkraft fällt, wobei dann eine Fixierung der Haftelemente 45 am Träger ebenso wie der Haftelemente 46 erfolgen kann, wobei der Schürzenteil 12 zunächst über die Haftelemente 46 im Taschenteil 14 festgelegt war.

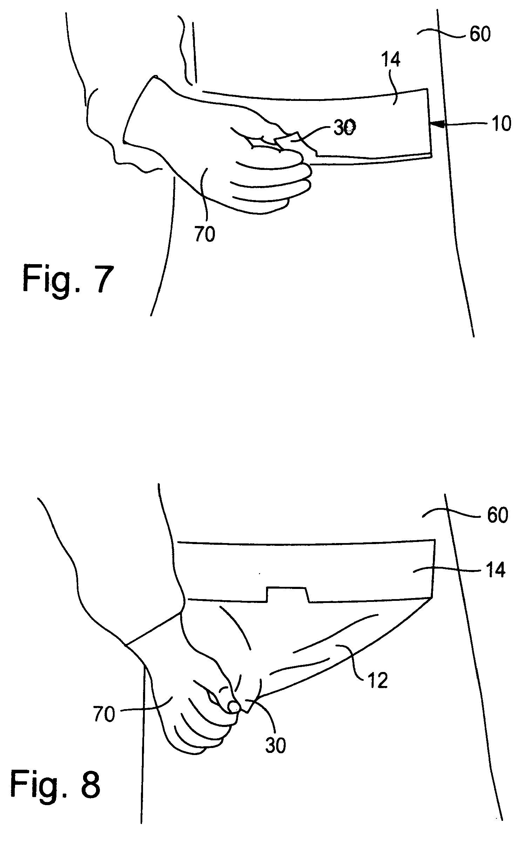

Die Figuren 7 und 8 zeigen nun das Entnehmen des Schürzenteils mit dem Anfassabschnitt 30 aus dem Taschenteil 14, der ebenfalls auf einen OP-Mantel 60 aufgebracht ist. Hierzu ergreift eine Hand 70 eines Trägers des Operationsmantels sowie der Operationsschürze 10 den Anfassabschnitt 30, wie in Figur 7 gezeigt, und zieht diesen von sich weg aus dem Taschenteil 14 heraus.

Auf die vorstehend beschriebene Weise kann eine Operationsschürze sowie ein Set bestehend aus Operationsschürze und Operationsmantel bereitgestellt werden, die einen zusätzlichen Schutz bei Operationen oder Verfahren bereitstellen, bei denen ein erhöhter Flüssigkeitsanfall gegeben ist und bei denen im Laufe der Operation eine erhöhte Sperrwirkung gegen Flüssigkeit und Mikroorganismen notwendig ist. Hierzu kann bereits vor oder während der Operation die Operationsschürze 10 auf dem Operationsmantel 60 im Brust-, Bauch- oder Hüftbereich je nach gefordertem Flüssigkeits- oder Mikroorganismenanfall aufgebracht werden, um dann bei Bedarf durch Ziehen am Anfassabschnitt 30 zu erreichen, dass der Schürzenteil 12 aus dem Taschenteil 14 herausgezogen werden kann und sich dann über den Operationsmantel 60 breitet.

## Patentansprüche

1. Wegwerfbare Operationsschürze (10) zum Schutz vor Flüssigkeiten oder Mikroorganismen umfassend einen einen Schürzenteil (12) bildenden Flachmaterialbahnabschnitt(13), bei der die Operationsschürze (10) einen Taschenteil (14) mit einer Öffnung (27) umfasst, durch welche der Schürzenteil (12) in den Taschenteil(14)in einer ersten Position aufnehmbar ist und in einer zweiten Position aus diesem entnehmbar ist, wobei der Schürzenteil (12) mit dem Taschenteil (14) im darin aufgenommenen und daraus entnommenen Zustand verbunden ist, **dadurch gekennzeichnet, dass** der Schürzenteil (12) entlang einer die Öffnung (27) des Taschenteils (14) begrenzenden Seitenkante (23) mit dem Taschenteil (14), insbesondere einstückig mit dem Taschenteil (14) verbunden ist.

2. Wegwerfbare Operationsschürze nach Anspruch 1 , **dadurch gekennzeichnet, dass** der Taschenteil (14) durch Umlegen eines freien Endes.(16), insbesondere entlang einer Faltlinie (18) in Querrichtung (2), eines mit dem Flachmaterialbahnabschnitt (13) des Schürzenteils (12) verbundenen, insbesondere einstückig verbundenen Flachmaterialbahnabschnitts (15), und dann Festlegen auf sich selbst, insbesondere entlang den Längskanten (20, 21), gebildet ist.

3. Wegwerfbare Operationsschürze nach einem der vorangehenden Ansprüche, **dadurch gekennzeichnet, dass** sich die Öffnung (27) des Taschenteils (14) über die gesamte Breite des Taschenteils (14) erstreckt.

4. Wegwerfbare Operationsschürze nach einem der vorangehenden Ansprüche, **dadurch gekennzeichnet, dass** auf dem Taschenteil (14) auf einer einem Träger zugewandten Seite der Operationsschürze (10) eine Befestigungseinrichtung (47) zum Festlegen der Operationsschürze (10) am Träger vorgesehen ist und wobei insbesondere die Befestigungseinrichtung (47) von einem Kleberauftrag oder einem doppelseitig klebenden Material, der oder das insbesondere durch ein Trennpapier einseitig abdeckbar ist, gebildet ist.

5. Wegwerfbare Operationsschürze nach einem der vorangehenden Ansprüche, **dadurch gekennzeichnet, dass** sich der Schürzenteil (12) ausgehend von dem Taschenteil (14) trapezförmig erweitert.

6. Wegwerfbare Operationsschürze nach einem der vorangehenden Ansprüche, **dadurch gekennzeichnet, dass** der Schürzenteil (12) aus dem Taschenteil(14) aus der sich in Querrichtung des Taschenteils (14) erstreckenden Öffnung(27) in Längsrichtung(4) als Auszugsrichtung des Schürzenteils (12) entnehmbar ist.

7. Wegwerfbare Operationsschürze nach einem der vorangehenden Ansprüche, **dadurch gekennzeichnet, dass** der Schürzenteil (12) gefaltet, insbesondere ziehharmonikaartig gefaltet, insbesondere mit Faltungen um Faltlinien (40) in Querrichtung (2), in den Taschenteil (14) in der ersten Position aufnehmbar ist, wobei insbesondere die im gefalteten Zustand nach außen weisende Seite des Schürzenteils (12) die in einem an einen Träger angelegten Zustand zum Träger weisende Seite des Schürzenteils (12) ist.

8. Wegwerfbare Operationsschürze nach einem der vorangehenden Ansprüche, **dadurch gekennzeichnet, dass** die Operationsschürze (10) aus einem Vlies-Folien-Laminat besteht, wobei die Folienseite des Laminats insbesondere die zum Träger weisende Seite in einem an einen Träger angelegten Zustand bildet.

9. Wegwerfbare Operationsschürze nach einem der vorangehenden Ansprüche, **dadurch gekennzeichnet, dass** der Schürzenteil (12) im in den Taschenteil (14) aufgenommenen Zustand in diesem lösbar festlegbar ist, wobei der Schürzenteil (12) insbesondere ein oder mehrere erste Haftelemente (46) trägt und korrespondierende zweite Haftelemente am Taschenteil (14) angeordnet sind, und wobei die korrespondierenden zweiten Haftelemente insbesondere durch das Material des Taschenteils (14) gebildet sind.

10. Wegwerfbare Operationsschürze nach einem der vorangehenden Ansprüche, **dadurch gekennzeichnet, dass** an den Längskanten (9) des Schürzenteils (12), insbesondere auf der einem Träger zugewandten Seite des Schürzenteils (12), Haftelemente (45) zum Anhaften des Schürzenteils (12) an einen Träger in einer aus dem Taschenteil (14) entnommenen Position vorgesehen sind.

11. Wegwerfbare Operationsschürze nach einem der vorangehenden Ansprüche, **dadurch gekennzeichnet, dass** der Schürzenteil (12), insbesondere an seiner freien, distalen Querkante (25), einen Anfassabschnitt (30) umfasst, der in einer in den Taschenteil (14) aufgenommenen Position des Schürzenteils (12) aus dem Taschenteil (14) herausragt.

12. Wegwerfbares Operationsbekleidungsset insbesondere zum Schutz vor Flüssigkeiten oder Mikroorganismen umfassend einen wegwerfbaren Operationsmantel (60) mit einem Vorderteil sowie integral damit verbundenen Ärmeln und eine Operationsschürze (10) nach einem der vorangehenden Ansprüche.

13. Wegwerfbares Operationsbekleidungsset nach Anspruch 12, **dadurch gekennzeichnet, dass** die Operationsschürze (10) im vorderen Brust-, Bauch- oder Taillenbereich mit ihrer Befestigungseinrichtung (47) am Operationsmantel (60) festlegbar ist.

14. Wegwerfbares Operationsbekleidungsset nach einem der vorangehenden Ansprüche 12 oder 13, **dadurch gekennzeichnet, dass** die an dem Schürzenteil (12) angebrachten Haftelemente (45, 46) an dem Operationsmantel (60) anhaftbar sind.

15. Verfahren zu Herstellung einer wegwerfbaren Operationsschürze (10) zum Schutz vor Flüssigkeiten oder Mikroorganismen umfassend einen einen Schürzenteil (12) bildenden Flachmaterialbahnabschnitt (13), bei der die Operationsschürze (10) einen Taschenteil (14) mit einer Öffnung (27) umfasst, durch die der Schürzenteil (12) in einer ersten Position in den Taschenteil (14) aufnehmbar ist und in einer zweiten Position aus diesem entnehmbar ist, und wobei der Schürzenteil (12) mit dem Taschenteil (14) im darin aufgenommenen und daraus entnommenen Zustand verbunden ist, **dadurch gekennzeichnet, dass** der Schürzenteil (12) entlang einer die Öffnung (27) des Taschenteils (14) begrenzenden Seitenkante (23) mit dem Taschenteil (14), insbesondere einstückig mit dem Taschenteil (14) verbunden ist, die folgenden Verfahrensschritte umfassend:
a. Bereitstellen eines Flachmaterialbahnabschnitts (13) für den Schürzenteil(12) und Bereitstellen eines Flachmaterialbahnabschnitts (15) für den Taschenteil,
b. Umlegen eines freien Endes (16) des Flachmaterialbahnabschnitts (15) des Taschenteils (14) um eine insbesondere in Querrichtung (2) verlaufende Faltlinie (18) und Festlegen insbesondere der Längskanten (20,21) des Taschenteils (14) auf sich selber, derart, dass eine Öffnung im Taschenteil (14) verbleibt und der Schürzenteil (12) und der Taschenteil (14) miteinander verbunden und,
c. Bereitstellen des Schürzenteils (12) in einer ersten Position, derart, dass der den Schürzenteil (12) bildende erste Flachmaterialbahnabschnitt(13) durch die Öffnung (27) des Taschenteils (14) aufgenommen wird.

16. Verfahren nach Anspruch 15, **dadurch gekennzeichnet, dass** der Schürzenteil (12) gefaltet in dem Taschenteil (14) aufgenommen ist, durch den Verfahrensschritt, dass der den Schürzenteil (12) bildende Flachmaterialbahnabschnitt (13) in Längsrichtung (4) entlang in Querrichtung (2) verlaufenden Faltlinien (40) unter Ausbildung von Flachmaterialbahnunterabschnitten (13'), insbesondere unter Ausbildung von Flachmaterialbahnunterabschnitten (13') mit gleicher Höhe, insbesondere unter einer ziehharmonikaartigen Anordnung der Flachmaterialbahnunterabschnitten (13')gefaltet wird.

17. Verfahren nach einem der Ansprüche 15 oder 16, **dadurch gekennzeichnet, dass** der den Taschenteil (14) bildende Flachmaterialbahnabschnitt (15) und der den Schürzenteil (12) bildende Flachmaterialbahnabschnitt (13) einstückig bereitgestellt werden.

## Claims

1. A disposable surgical apron (10) for protecting against liquids or microorganisms, including a length (13) of flat material forming an apron part (12), in which the surgical apron (10) includes a pocket part (14) with an opening (27) through which the apron part (12) can be received into the pocket part (14) in a first position and removed from it in a second position, and the apron part (12) is joined to the pocket part (14) in the state in which it has been received in and in which it has been removed from the pocket part, **characterized in that** the apron part (12) is joined to the pocket part (14), in particular in one piece with the pocket part (14), along a side edge (23) that defines the opening (27) of the pocket part (14).

2. The disposable surgical apron of claim 1, **characterized in that** the pocket part (14) is formed by folding over a free end (16), in particular along a folding line (18) in the transverse direction (2), of a length (15) of flat material, joined, in particular in one piece, with the length (13) of flat material of the apron part (12), and then by fixation onto itself, in particular along the longitudinal edges (20, 21).

3. The disposable surgical apron of one of the foregoing claims, **characterized in that** the opening (27) of the pocket part (14) extends over the entire width of the pocket part (14).

4. The disposable surgical apron of one of the foregoing claims, **characterized in that** a fixation device (47) for putting the surgical apron (10) on the wearer is provided on the pocket part (14), on a side of the surgical apron (10) facing toward a wearer, and in particular, the fixation device (47) is formed by an application of adhesive, or by a material that is adhesive on both sides and can be covered on one side, in particular by an anti-adhesive paper.

5. The disposable surgical apron of one of the foregoing claims, **characterized in that** the apron part (12) broadens trapezoidally beginning at the pocket part (14).

6. The disposable surgical apron of one of the foregoing claims, **characterized in that** the apron part (12) can be removed in the longitudinal direction (4), which is the direction in which the apron part (12) is pulled out from the pocket part (14), from the opening (27) extending in the transverse direction of the pocket part (14).

7. The disposable surgical apron of one of the foregoing claims, **characterized in that** the apron part (12) can be received in the pocket part (14) in the first position in folded fashion, in particular in zig-zag-folded fashion, in particular with folds on fold lines (40) in the transverse direction (2), and in particular, the side of the apron part (12) that, in a state in which it is placed on a wearer, faces outward in the folded state is the side of the apron part (12) that points toward the wearer.

8. The disposable surgical apron of one of the foregoing claims, **characterized in that** the surgical apron (10) comprises a nonwoven-film laminate, and the film side of the laminate in particular forms the side that, in a state in which it is placed on a wearer, points toward the wearer.

9. The disposable surgical apron of one of the foregoing claims, **characterized in that** the apron part (12), in the state received in the pocket part (14), is detachably fixable in the pocket part, and the apron part (12) in particular has one or more first fastening elements (46) and corresponding second fastening elements are located on the pocket part (14), and the corresponding second fastening elements are formed in particular by the material of the pocket part (14).

10. The disposable surgical apron of one of the foregoing claims, **characterized in that** on the longitudinal edges (9) of the apron part (12), in particular on the side of the apron part (12) facing toward a wearer, fastening elements (45) for attaching the apron part (12) to a wearer are provided in a position in which the apron part has been removed from the pocket part (14).

11. The disposable surgical apron of one of the foregoing claims, **characterized in that** the apron part (12), in particular on its free, distal transverse edge (25), includes a portion (30) to be grasped, which in a position in which the apron part is received in the pocket part (14) protrudes from the pocket part (14).

12. A disposable surgical garment kit, in particular for protecting against liquids or microorganisms, including a disposable surgical gown (60) having a front part and sleeves, in one piece joined to it, and a surgical apron (10) of one of the foregoing claims.

13. The disposable surgical garment kit of claim 12, **characterized in that** the surgical apron (10) is fixable to the surgical gown (60) in the front chest, abdomen, or waist area, with its fixation device (47).

14. The disposable surgical garment kit of one of the foregoing claims 12 or 13, **characterized in that** the fastening elements (45, 46) attached to the apron part (12) can be made to adhere to the surgical gown (60).

15. A method for producing a disposable surgical apron (10) for protecting against liquids or microorganisms, including a length (13) of flat material forming an apron part (12), in which the surgical apron (10) includes a pocket part (14) with an opening (27) through which the apron part (12) in a first position can be received into the pocket part (14) and in a second position can be removed from it, and the apron part (12) is joined to the pocket part (14) in the state in which it has been received in and removed from the pocket part, including the following method steps:
a. furnishing a length (13) of flat material for the apron part (12) and furnishing a length (15) of flat material for the pocket part,
b. folding a free end (16) of the length (15) of flat material of the pocket part (14) over at a fold line (18) extending in particular in the transverse direction (2), and fixation particularly of the longitudinal edges (20, 21) of the pocket part (14) to the pocket part itself in such a way that an opening remains in the pocket part (14) and the apron part (12) and the pocket part (14) are joined together, and
c. furnishing the apron part (12) in a first position in such a way that the first length (13) of flat material, forming the apron part (12), is received through the opening (27) of the pocket part (14).

16. The method of claim 15, **characterized in that** the apron part (12) is received in a folded state folded in the pocket part (14) by means of the method step in which the length (13) of flat material forming the apron part (12) is folded in the longitudinal direction (4), along fold lines (40) extending in the transverse direction (2), forming portions of lengths (13') of flat material, in particular forming portions of lengths (13') of flat material of identical height, in particular with an zig-zag-like arrangement of the lengths (13') of flat material.

17. The method of one of claims 15 or 16, **characterized in that** the length (15) of flat material forming the pocket part (14) and the length (13) of flat material forming the apron part (12) are furnished in one piece.

## Revendications

1. Tablier chirurgical (10) jetable destiné à la protection contre des liquides ou micro-organismes, comprenant une portion de bande en matériau plat (13) formant une partie de tablier (12), dans lequel le tablier chirurgical (10) comprend un partie de poche (14) ayant une ouverture (27) par laquelle la portion de tablier (12) peut être reçue dans la partie de poche (14) dans une première position et peut être sortie de celle-ci dans une deuxième position, ladite portion de tablier (12) étant reliée à la partie de poche (14) à l'état où elle est reçue dans celle-ci et où elle est sortie de celle-ci, **caractérisé par le fait que** la partie de tablier (12) est reliée à la partie de poche (14) le long d'un bord latéral (23) limitant l'ouverture (27) de la partie de poche (14), en particulier reliée d'un seul tenant à la partie de poche (14).

2. Tablier chirurgical jetable selon la revendication 1, **caractérisé par le fait que** la partie de poche (14) est formée en pliant une extrémité libre (16), en particulier suivant une ligne de pliage (18) dans la direction transversale (2), d'une portion de bande en matériau plat (15) reliée, en particulier reliée d'un seul tenant, à la portion de bande en matériau plat (13) de la partie de tablier (12), et puis en la fixant sur elle-même, en particulier suivant les bords longitudinaux (20, 21).

3. Tablier chirurgical jetable selon l'une quelconque des revendications précédentes, **caractérisé par le fait que** ladite ouverture (27) de la partie de poche (14) s'étend sur l'ensemble de la largeur de la partie de poche (14).

4. Tablier chirurgical jetable selon l'une quelconque des revendications précédentes, **caractérisé par le fait qu'**un dispositif de fixation (47) destiné à fixer le tablier chirurgical (10) sur un porteur est prévu sur la partie de poche (14), sur une face du tablier chirurgical (10) qui montre vers le porteur, et dans lequel, en particulier, ledit dispositif de fixation (47) est constitué par un dépôt de colle ou par une matière adhésive double-face lequel ou laquelle peut être recouvert(e) sur une face en particulier par un papier de séparation.

5. Tablier chirurgical jetable selon l'une quelconque des revendications précédentes, **caractérisé par le fait que** la partie de tablier (12) s'élargit en trapèze à partir de la partie de poche (14).

6. Tablier chirurgical jetable selon l'une quelconque des revendications précédentes, **caractérisé par le fait que** la partie de tablier (12) peut être sortie de la partie de poche (14) par ladite ouverture (27) s'étendant dans la direction transversale de la partie de poche (14), dans la direction longitudinale (4) en tant que direction de retrait de la partie de tablier (12).

7. Tablier chirurgical jetable selon l'une quelconque des revendications précédentes, **caractérisé par le fait que** la partie de tablier (12) peut être reçue de manière pliée, en particulier de manière pliée de type accordéon, en particulier par des pliages sur des lignes de pliage (40) dans la direction transversale (2), dans la partie de poche (14) dans la première position, dans lequel, en particulier, la face de la partie de tablier (12) qui montre vers l'extérieur à l'état plié est la face de la partie de tablier (12) qui montre vers le porteur dans un état où il est mis sur un porteur.

8. Tablier chirurgical jetable selon l'une quelconque des revendications précédentes, **caractérisé par le fait que** le tablier chirurgical (10) est fait d'un stratifié de non-tissé et de film, dans lequel la face de film du stratifié forme en particulier la face qui montre vers le porteur dans un état où il est mis sur un porteur.

9. Tablier chirurgical jetable selon l'une quelconque des revendications précédentes, **caractérisé par le fait que** la partie de tablier (12), à l'état où elle est reçue dans la partie de poche (14), peut être fixée de manière amovible dans celle-ci, dans lequel la partie de tablier (12), en particulier, porte un ou plusieurs premiers éléments adhésifs (46), et de deuxièmes éléments adhésifs correspondants sont disposés sur la partie de poche (14), et dans lequel lesdits deuxièmes éléments adhésifs correspondants sont formés en particulier par la matière de la partie de poche (14).

10. Tablier chirurgical jetable selon l'une quelconque des revendications précédentes, **caractérisé par le fait que** des éléments adhésifs (45) destinés à faire adhérer la partie de tablier (12) à un porteur dans une position où elle est sortie de la partie de poche (14) sont prévus sur les bords longitudinaux (9) de la partie de tablier (12), en particulier sur la face de la partie de tablier (12) qui montre vers un porteur.

11. Tablier chirurgical jetable selon l'une quelconque des revendications précédentes, **caractérisé par le fait que** la partie de tablier (12), en particulier sur son bord transversal (25) distal libre, comprend une portion à saisir (30) qui, dans une position où la partie de tablier (12) est reçue dans la partie de poche (14), dépasse de la partie de poche (14).

12. Ensemble d'habillement chirurgical jetable destiné en particulier à la protection contre des liquides ou micro-organismes, comprenant un manteau chirurgical (60) jetable ayant une partie avant ainsi que des manches reliées intégralement à celle-ci, et un tablier chirurgical (10) selon l'une quelconque des revendications précédentes.

13. Ensemble d'habillement chirurgical jetable selon la revendication 12, **caractérisé par le fait que** le tablier chirurgical (10) peut être fixé, dans la zone avant de la poitrine, du ventre ou de la taille, par son dispositif de fixation (47) sur le manteau chirurgical (60).

14. Ensemble d'habillement chirurgical jetable selon l'une quelconque des revendications précédentes 12 ou 13, **caractérisé par le fait que** les éléments adhésifs (45, 46) attachés à la partie de tablier (12) peuvent adhérer au manteau chirurgical (60).

15. Procédé de fabrication d'un tablier chirurgical (10) jetable destiné à la protection contre des liquides ou micro-organismes, comprenant une portion de bande en matériau plat (13) formant une partie de tablier (12), dans lequel le tablier chirurgical (10) comprend un partie de poche (14) ayant une ouverture (27) par laquelle la portion de tablier (12) peut être reçue dans la partie de poche (14) dans une première position et peut être sortie de celle-ci dans une deuxième position, et ladite portion de tablier (12) étant reliée à la partie de poche (14) à l'état où elle est reçue dans celle-ci et où elle est sortie de celle-ci, **caractérisé par le fait que** la partie de tablier (12) est reliée à la partie de poche (14) le long d'un bord latéral (23) limitant l'ouverture (27) de la partie de poche (14), en particulier reliée d'un seul tenant à la partie de poche (14), comprenant les étapes de procédé suivantes :
a. fournir une portion de bande en matériau plat (13) pour la partie de tablier (12) et fournir une portion de bande en matériau plat (15) pour la partie de poche,
b. plier une extrémité libre (16) de la portion de bande en matériau plat (15) de la partie de poche (14) sur une ligne de pliage (18) s'étendant en particulier dans la direction transversale (2), et fixer en particulier les bords longitudinaux (20, 21) de la partie de poche (14) sur eux-mêmes de telle sorte qu'il reste une ouverture dans la partie de poche (14) et que les parties de tablier (12) et de poche (14) sont reliées entre elles, et
c. fournir la partie de tablier (12) dans une première position de telle sorte que la première portion de bande en matériau plat (13) formant la partie de tablier (12) est reçue par ladite ouverture (27) de la partie de poche (14).

16. Procédé selon la revendication 15, **caractérisé par le fait que** la partie de tablier (12) est reçue de manière pliée dans la partie de poche (14), par l'étape de procédé consistant à plier la portion de bande en matériau plat (13) formant la partie de tablier (12), dans la direction longitudinale (4), suivant des lignes de pliage (40) s'étendant dans la direction transversale (2), en réalisant des sous-portions de bande en matériau plat (13"), en particulier en réalisant des sous-portions de bande en matériau plat (13') à hauteur égale, en particulier par une disposition de type accordéon des sous-portions de bande en matériau plat (13').

17. Procédé selon l'une quelconque des revendications 15 ou 16, **caractérisé par le fait que** la portion de bande en matériau plat (15) formant la partie de poche (14) et la portion de bande en matériau plat (13) formant la partie de tablier (12) sont fournies en une seule pièce.
